# EUROPÄISCHE PATENTANMELDUNG

(11) **EP 1 396 475 A1**
(43) Veröffentlichungstag der Anmeldung: **10.03.2004**
(21) Anmeldenummer: 02020064.8
(22) Anmeldetag: 06.09.2002
(51) Int. Cl.: C03B 3/00

(54) **Einlegemaschine zum Beschicken eines Glasschmelzofens**

(71) Anmelder: DBG Delta GmbH, 52355 Düren (DE)
(72) Erfinder: Fraikin, Michael, 52396 Heimbach (DE)
(74) Vertreter: Popp, Eugen, Dr.

(57) **Zusammenfassung**

Einlegemaschine zum Beschicken eines Glasschmelzofens, insbesondere Glasschmelzwannenofens, mit einem hin- und herbewegbaren Einlegetisch (10), über welchem ein Aufgabebehälter (11) für ein Glasgemenge angeordnet ist, an dessen Vorderwand (12) ein unten vom Einlegetisch (10) begrenzter Durchtrittsspalt (13) ausgebildet ist, und dessen Rückwand (14) mindestens ein beweglicher Schaber (15) zugeordnet ist, der einen Spalt (16) zwischen der Rückwand (14) des Aufgabebehälters (11) und der Oberfläche (17) des Einlegetisches (10) abdichtet. Der Schaber (15) ist in Abhängigkeit von den Bewegungen des Einlegetisches (10) auf- und abbewegbar. In vorderster Position des Einlegetisches (10) liegt der Schaber (15) mit seiner Schaberleiste (23) auf einer nach vorne abfallenden Keilfläche (22) einer sich über die Breite des Einlegetisches (10) erstreckenden keilförmigen Leiste (21) auf, die auf dem Einlegetisch (10) montiert ist.

## Beschreibung

Die Erfindung betrifft eine Einlegemaschine zum Beschicken eines Glasschmelzofens mit einem hin- und herbewegbaren bzw. vor- und zurückbewegbaren Einlegetisch, über welchem ein Aufgabebehälter für ein Glasgemenge angeordnet ist, an dessen Vorderwand ein unten vom Einlegetisch begrenzter Durchtrittsspalt ausgebildet ist, und dessen Rückwand mindestens ein beweglicher Schaber zugeordnet ist, der einen Spalt zwischen der Rückwand des Aufgabebehälters und der Oberfläche des Aufgabetisches abdichtet, wobei der oder die beweglichen Schaber mit zum Anheben oder Absenken dienenden Hubelementen verbunden sind, deren Hub in Abhängigkeit von den Bewegungen des Einlegetisches derart gesteuert ist, dass der mindestens eine Schaber während der Vorschubbewegung des Einlegetisches angehoben und während der Rückzugsbewegung des Einlegetisches abgesenkt ist.

Eine derartige Einlegemaschine ist aus der DE 32 06 174 C2 bekannt. Diese bekannte Einlegemaschine zeichnet sich insbesondere dadurch aus, dass der bewegliche Schaber nur während der Rückzugsbewegung des Einlegetisches auf der Tischoberfläche dichtend anliegt. Während der Tischvorschubbewegung ist der Schaber angehoben, und zwar unter dem Gesichtspunkt, dass bei der Tischvorschubbewegung kaum Gemenge aus dem abzudichtenden Spalt gelangen kann. Die Folge und auch das Ziel dieser bekannten Technologie ist, dass die Schabekante des Schabers einem geringeren Verschleiß ausgesetzt wird. Damit lässt sich die Standseite des Schabers und des Einlegetisches verlängern.

Es hat sich jedoch in der Praxis gezeigt, dass ein Materialrückfluß während der Tischvorschubbewegung durch den Spalt zwischen Tischoberfläche und Rückwand des Aufgabebehälters nicht ganz vermieden werden kann. Dementsprechend lagerte sich Rohglasgemenge auch im Einlegetischbereich hinter den Schabern ab. Es kam mitunter vor, dass dieses Rohglasgemenge so groß war, dass selbiges Material nach hinten über das Tischende fiel und somit auch auf die Antriebsplattform der gesamten Maschine.

Der vorliegenden Erfindung liegt dementsprechend die Aufgabe zugrunde, die bekannte Einlegemaschine dahingehend zu verbessern, dass die Ablagerung von Rohglasgemenge hinter den Schabern vermieden wird. Es soll also ein "sauberer" Ablauf der Gemengedosierung im Einklang mit den auf- und abbewegbaren Schabern, die in der Regel pneumatisch angetrieben sind, gewährleistet werden.

Diese Aufgabe wird erfindungsgemäß durch die kennzeichnenden Merkmale des Anspruches 1 gelöst. Die erfindungsgemäße keilförmige Leiste verhindert eine Ablagerung von Rohglasgemenge hinter den der Rückwand des Aufgabebehälters zugeordneten Schabern. Ganz generell sei in diesem Zusammenhang darauf hingewiesen, dass das Rohglasgemenge im Aufgabebehälter automatisch durch sein spezifisches Gewicht als auch durch automatische Auffüllung nach unten fällt. Diese "Gemengesäule" steht bzw. liegt kontinuierlich auf dem Einlegetisch der Maschine auf. Der Einlegetisch kann in seiner Neigung zur Glasschmelze nach Kundenwunsch eingestellt werden. Mit einer kontinuierlichen Hin- und Herbewegung des Tisches (der Hub kann bis zu 230 mm betragen) fällt das Rohglasgemenge in einer gleichbleibenden "Teppichdicke" (durch voreingestellte Dosierschieber bestimmt) über die vordere Tischkante in die Glasschmelze. Um dies zu gewährleisten werden bei Rückzugsbewegung des Einlegetisches die Schaber auf die Oberfläche des Einlegetisches abgesenkt. Bei Beginn der Rückzugsbewegung des Einlegetisches setzt der wenigstens eine Schaber mit seiner Schaberleiste auf der keilförmigen Leiste, insbesondere der nach vorne abfallenden Keilfläche derselben auf. Die Leiste ist hinsichtlich ihrer Höhe sowie Steigung der nach vorne abfallenden Keilfläche auf eine maximale Teppichdicke abgestimmt. Dementsprechend kann sich auch kein Gemenge darüber hinaus aufbauen. Der wenigstens eine Schaber gleitet durch seinen kontinuierlichen Vorschub der nach vorne abfallenden Keilfläche entlang auf den Einlegetisch, bis dieser seiner Endposition beim Verfahren nach hinten bzw. zurück erreicht hat. Während dieser Zeit fällt Rohglasgemenge automatisch über die vordere Tischkante in die Schmelze. Dieses Gemengeverhalten wird durch den auf den Einlegetisch aufgesetzten Schaber bestimmt, da selbiger den Tisch nach hinten absperrt und sich somit das Gemenge gegeneinander aufschiebt. Die entsprechende Absperrung nach hinten führt auch zum Überlauf des Rohglasgemenges an der vorderen Tischkante. Das Zusammenwirken von Schaber und keilförmiger Leiste, insbesondere Metallleiste, hat sich als derart effizient dargestellt, dass vonseiten eines Anlagenbetreibers eine Überwachung des hinteren Tischbereiches in bezug auf Restgemenge und Verunreinigungen nicht mehr erforderlich ist.

Details der erfindungsgemäßen Lösung mit keilförmiger Tischleiste sind in den Ansprüchen 2 bis 6 beschrieben.

In Verbindung mit der beschriebenen Konstruktion, aber auch unabhängig davon, zeichnet sich die erfindungsgemäße Einlegemaschine noch durch eine besondere seitliche Abdichtung des Aufgabebehälters im Bereich zwischen diesem und dem Seitenrand des Einlegetisches aus. Diesbezüglich wird auf die Ansprüche 7 ff. verwiesen. In diesem Zusammenhang muß man wissen, dass der Aufgabebehälter innerhalb eines äußeren Bunkers zur Aufnahme von Rohglasgemenge angeordnet ist. Die vorgeschlagene Abdichtung des Aufgabebehälters betrifft dementsprechend denjenigen Bereich der Einlegemaschine, wo der Einlegetisch längs der Bunkerwand verfährt. Beim Stand der Technik ist in diesem Bereich keine Abdichtung des Aufgabebehälters vorgesehen. Dementsprechend konnte eine Verschmutzung der Einlegemaschine durch Austritt von Rohglasmaterial, insbesondere Granulatpartikel im Spalt zwischen den Seitenwänden des Aufgabebehälters und dem seitlichen Rand des Einlegetisches nicht verhindert werden. Durch die erfindungsgemäß vorgesehene seitliche Wandabdichtung des Aufgabebehälters wird die erwähnte Verschmutzung sicher verhindert. Der Spalt zwischen Aufgabebehälter und Oberfläche des Einlegetisches im Bereich der Seitenwände und Rückwand des Aufgabebehälters wird also erfindungsgemäß stets abgedichtet. Damit ist eine präzise Gemengedosierung möglich.

Konstruktive Details der erfindungsgemäßen Begrenzungsplatten an den beiden Seitenwänden des Aufgabebehälters sind in den Ansprüchen 8 ff. beschrieben.

Nachstehend wird eine bevorzugte Ausführungsform einer erfindungsgemäß ausgebildeten Einlegemaschine anhand der beigefügten Zeichnung erläutert. Diese zeigt in:
- Fig. 1: einen Teil einer erfindungsgemäßen Einlegemaschine mit Aufgabebehälter, Einlegetisch und Schaber in schematischem Längsschnitt, wobei der Einlegetisch sich in der vordersten Tischposition befindet;
- Fig. 2: die Anordnung gemäß Fig. 1 in einer Zwischenposition des Einlegetisches;
- Fig. 3: die Anordnung gemäß Fig. 1 in hinterer Tischposition; und
- Fig. 4: die Anordnung nach den Fig. 1-3 in Ansicht von hinten, teilweise im Querschnitt, und vergrößertem Maßstab.

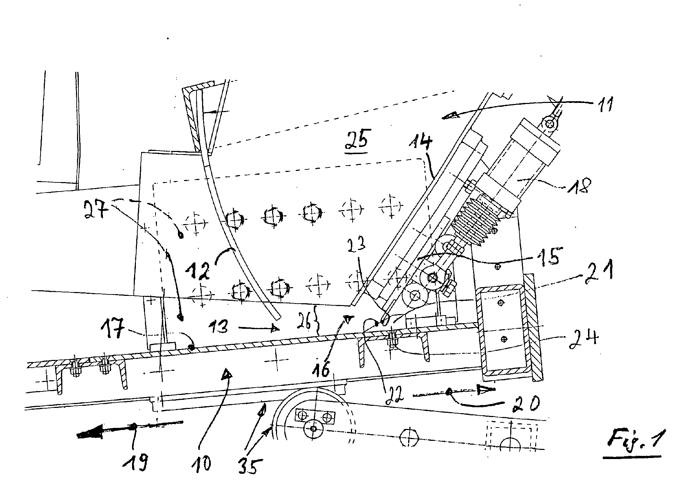

Der in den Figuren 1-3 dargestellte Teil einer Einlegemaschine zum Beschicken eines Glasschmelzofens zeigt folgende Teile einer solchen Einlegemaschine:

Einen hin- und herbewegbaren bzw. vor- und zurückbewegbaren Einlegetisch 10, einen über dem Einlegetisch 10 angeordneten Aufgabebehälter 11 für ein Glasgemenge, an dessen Vorderwand 12 ein unten vom Einlegetisch 10 begrenzter Durchtrittsspalt 13 ausgebildet ist, und mindestens einen der Rückwand 14 des Aufgabebehälters 11 zugeordneten Schaber 15, der einen Spalt 16 zwischen der Rückwand 14 des Aufgabebehälters 11 und der Oberfläche des Einlegetisches 10 abdichtet. Der wenigstens eine bewegliche Schaber 15 ist mit zum Anheben oder Absenken dienenden Hubelementen 18 verbunden, deren Hub in Abhängigkeit von den Bewegungen des Einlegetisches 10 derart gesteuert ist, dass der mindestens eine Schaber 15 während der Vorschubbewegung in Richtung des Pfeiles 19 des Einlegetisches 10 angehoben und während der Rückzugsbewegung entsprechend Pfeil 20 des Einlegetisches 10 abgesenkt ist.

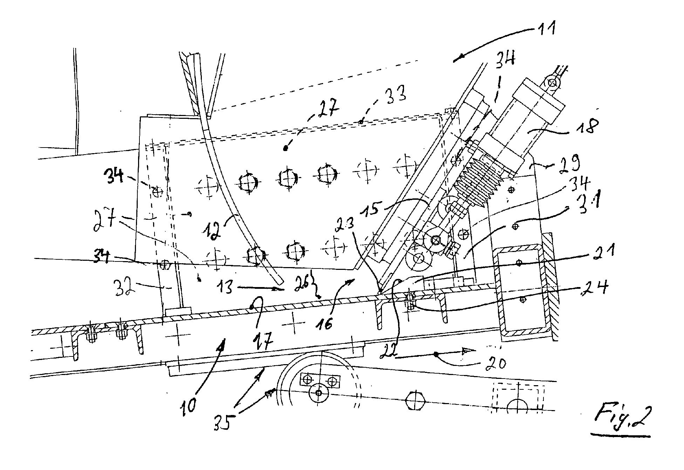

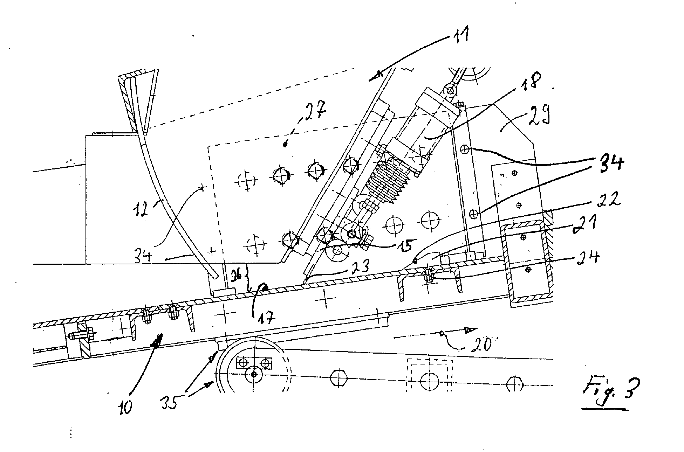

An der Oberfläche 17 des Einlegetisches 10 ist eine sich über die Breite des Einlegetisches 10 erstreckende keilförmige Leiste 21 mit nach vorne abfallender Keilfläche 22 angeordnet, und zwar derart, dass der mindestens eine Schaber 15 in vorderster Position des Einlegetisches 10 entsprechend Fig. 1 auf der keilförmigen Leiste 21 bzw. deren nach vorne abfallenden Keilfläche 22 aufliegt, um dann bei Rückzugsbewegung des Einlegetisches in Richtung des Pfeiles 20 über die nach vorne abfallende Keilfläche 22 bewegt zu werden, bis die Schaberleiste 23 entsprechend den Figuren 2 und 3 an der Oberfläche 17 des Einlegetisches 10 zur Auflage kommt.

Die Höhe der keilförmigen Leiste 21 entspricht bei der dargestellten Ausführungsform etwa der halben Breite des Spaltes 16 zwischen Rückwand 14 des Aufgabebehälters 11 und der Oberfläche 17 des Einlegetisches 10. Die Keilfläche 22 schließt mit der Oberfläche 17 des Einlegetisches 10 einen Winkel von etwa 30° ein. Dieser Winkel kann zwischen 15° und 45° liegen. Dies ist letztlich eine Frage der Optimierung zwischen der Hin- und Herbewegung des Einlegetisches, insbesondere auch der eingestellten Neigung des Einlegetisches. Bei der dargestellten Ausführungsform ist die keilförmige Leiste 21 auf die Oberfläche 17 des Einlegetisches 10 aufgeschraubt (Schraube 24) zur Feineinstellung kann die keilförmige Leiste 21 in Richtung der Hinund Herbewegung des Einlegetisches 10 auch versetzbar angeordnet sein. Auch ist es denkbar, in der keilförmigen Leiste 21 entsprechende Langlochbohrungen vorzusehen, die sich im montierten Zustand parallel zur Hin- und Herbewegung des Einlegetisches 10 erstrecken. Durch diese Langlochbohrungen lässt sich die keilförmige Leiste 21 ebenfalls individuell zum Spalt 16 einstellen. Alternativ kann die keilförmige Leiste 21 auch auf die Oberfläche 17 des Einlegetisches 10 geschweißt, gelötet oder genietet sein.

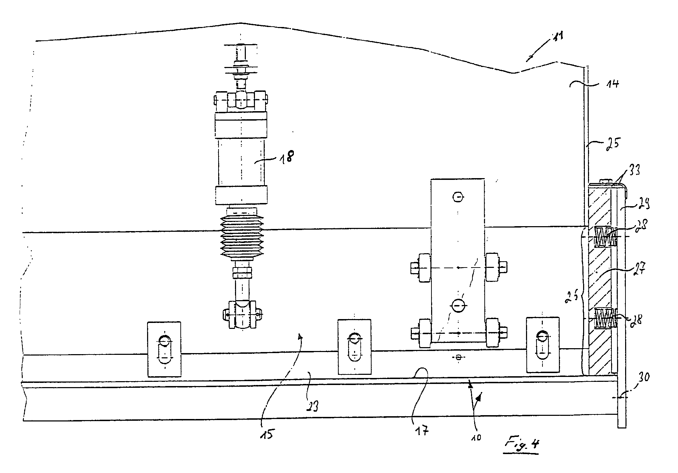

Wie die Figuren 1-4 erkennen lassen, ist zwischen den Seitenwänden 25 des Aufgabebehälters 11 und Einlegetisch 10 bzw. dessen Oberfläche 17 ein Spalt 26 ausgebildet. Dieser Spalt 26 ist durch eine unter elastischer Vorspannung an den Seitenwänden 25 des Aufgabebehälters 11 gleitend anliegende Begrenzungsplatte 27 abgedichtet. Eine solche Begrenzungsplatte 27 ist an beiden Seiten des Aufgabebehälters 11 vorgesehen. Die Begrenzungsplatten 27 sind mit dem Einlegetisch fest verbunden, so dass sie mit diesem hin- und herbewegbar sind. Die Begrenzungsplatten 27 werden bei den dargestellten Ausführungsformen jeweils über Druckfedern 28 gegen die Seitenwände 25 des Aufgabebehälters 11 gedrückt, so dass die gewünschte Abdichtung der seitlichen Spalte 26 sichergestellt ist. Die Abstützung der Druckfedern 28 erfolgt an seitlichen Wangen 29, die an den beiden Längsseiten des Einlegetisches 10 über dessen Oberfläche 17 vorstehend angeordnet sind. Bei den beiden Seitenwangen 29 handelt es sich um Metallplatten, die an den beiden Längsrändern des Einlegetisches 10 angeschraubt sind (Schraubverbindung 30 in Figur 4).

Die Begrenzungsplatten 27 bestehen vorzugsweise aus Gusseisen mit entsprechend hoher Gleitfähigkeit und gleichzeitiger hoher Verschleißfestigkeit.

Die Begrenzungsplatten 27 sind bei der konkreten Ausführungsform in Richtung parallel zu den Seitenwänden 25 des Aufgabebehälters 10 jeweils,innerhalb eines U-förmigen Rahmens gehalten, der aus zwei sich etwa senkrecht zur Oberfläche 17 des Einlegetisches 10 erstreckende Rahmenprofile 31, 32 sowie ein im Abstand von der Oberfläche 17 des Einlegetisches 10 sich parallel dazu erstreckendes Rahmenprofil 33 umfaßt. Im übrigen liegen die Begrenzungsplatten 27 auf der Oberfläche 17 des Einlegetisches 10 auf. Damit sind die Begrenzungsplatten 27 nach vorne, hinten, oben und nach unten sicher gehalten.

Die Rahmenprofile können als L- oder I-Profile ausgebildet sein. Das sich parallel zur Oberfläche 17 des Einlegetisches 10 erstreckende Rahmenprofil 33 kann auch als Blechprofil ausgebildet sein. Vorzugsweise sind die Rahmenprofile 31, 32, 33 an den dem Aufgabebehälter 11 zugewandten Seiten der seitlichen Wangen 29 befestigt, insbesondere angeschraubt (Schraubverbindung 34).

Schließlich sei noch erwähnt, dass die elastische Vorspannung der Begrenzungsplatten 27 einstellbar sein kann. Zu diesem Zweck können den Schraubendruckfedern 28 entsprechende Vorspannelemente zugeordnet sein, die von den Außenseiten der Seitenwangen 29 her betätigbar sind.

Schließlich sei an dieser Stelle noch erwähnt, dass der wenigstens eine Schaber an der der Oberfläche 17 des Einlegetisches 10 zugewandten Seite durch eine auswechselbare Schaberleiste begrenzt ist, sowie dies bereits aus dem Stand der Technik bekannt ist. Eine nähere Beschreibung dieser Konstruktion erübrigt sich daher.

Der Einlegetisch 10 ist im übrigen rollengelagert, wobei die entsprechende Rollenführung in den Figuren 1-3 mit Bezugsziffer 35 gekennzeichnet ist.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 10: Einlegetisch
- 11: Aufgabebehälter
- 12: Vorderwand
- 13: Durchtrittsspalt
- 14: Rückwand
- 15: Schaber
- 16: Spalt
- 17: Oberfläche
- 18: Hubelement
- 19: Pfeil
- 20: Pfeil
- 21: Keilförmige Leiste
- 22: Keilfläche
- 23: Schaberleiste
- 24: Schrauben
- 25: Seitenwand
- 26: Spalt
- 27: Begrenzungsplatte
- 28: Druckfeder
- 29: Wange
- 30: Schraubverbindung
- 31: Rahmenprofil
- 32: Rahmenprofil
- 33: Rahmenprofil
- 34: Schraubverbindung
- 35: Rollenführung

## Patentansprüche

1. Einlegemaschine zum Beschicken eines Glasschmelzofens, insbesondere Glasschmelzwannenofens, mit einem
- hin- und herbewegbaren Einlegetisch (10),
- über welchem ein Aufgabebehälter (11) für ein Glasgemenge angeordnet ist, an dessen Vorderwand (12) ein unten vom Einlegetisch (10) begrenzter Durchtrittsspalt (13) ausgebildet ist, und
- dessen Rückwand (14) mindestens ein beweglicher Schaber (15) zugeordnet ist, der einen Spalt (16) zwischen der Rückwand (14) des Aufgabebehälters (11) und der Oberfläche (17) des Einlegetisches (10) abdichtet,
- wobei der wenigstens eine bewegliche Schaber (15) mit zum Anheben oder Absenken dienenden Hubelementen (18) verbunden ist, deren Hub in Abhängigkeit von den Bewegungen des Einlegetisches (10) derart gesteuert ist, dass der mindestens eine Schaber (15) während der Vorschubbewegung (Pfeil 19) des Einlegetisches (10) angehoben und während der Rückzugsbewegung (Pfeil 20) des Einlegetisches (10) abgesenkt ist,
**dadurch gekennzeichnet, dass**
an der Oberfläche (17) des Einlegetisches (10) eine sich über dessen Breite erstreckende keilförmige Leiste (21) mit nach vorne abfallender Keilfläche (22) angeordnet ist derart, dass der mindestens eine Schaber (15) in vorderster Position des Einlegetisches (10) auf der keilförmigen Leiste (21), insbesondere deren nach vorne abfallenden Keilfläche (22) aufliegt, um dann bei Rückzugsbewegung (20) des Einlegetisches (10) über die nach vorne abfallende Keilfläche (22) und anschließende Oberfläche (17) des Einlegetisches (10) unter ständiger Anlage an diesen Flächen bewegt zu werden.

2. Einlegemaschine nach Anspruch 1,
**dadurch gekennzeichnet, dass**
die maximale Höhe der keilförmigen Leiste (21) etwa der halben Breite bzw. Höhe des Spaltes (16) zwischen Rückwand (14) des Aufgabebehälters (11) und der Oberfläche (17) des seitlichen Randes des Einlegetisches (10) ist.

3. Einlegemaschine nach Anspruch 1 oder 2,
**dadurch gekennzeichnet, dass**
die Keilfläche (22) mit der Oberfläche (17) des Einlegetisches (10) einen Winkel von etwa 15° bis 45°, insbesondere etwa 30° einschließt.

4. Einlegemaschine nach einem der Ansprüche 1 bis 3,
**dadurch gekennzeichnet, dass**
die keilförmige Leiste (21) auf die Oberfläche (17) des Einlegetisches (10) aufgeschraubt ist (Schrauben 24).

5. Einlegemaschine nach Anspruch 4,
**dadurch gekennzeichnet, dass**
die keilförmige Leiste (21) in Richtung der Hin- und Herbewegung (Pfeile 19, 20) des Einlegetisches (10) versetzbar ist.

6. Einlegemaschine nach einem der Ansprüche 1-3,
**dadurch gekennzeichnet, dass**
die keilförmige Leiste (21) auf die Oberfläche (17) des Einlegetisches (10) geschweißt oder gelötet ist.

7. Einlegemaschine, insbesondere nach einem der Ansprüche 1-6,
**dadurch gekennzeichnet, dass**
ein Spalt (26) zwischen den Seitenwänden (25) des Aufgabebehälters (11) einerseits und Einlegetisch (10) andererseits durch eine unter elastischer Vorspannung an den Seitenwänden (25) des Aufgabebehälters (21) gleitend anliegende Begrenzungsplatte (27) abgedichtet ist.

8. Einlegemaschine nach Anspruch 7,
**dadurch gekennzeichnet, dass**
die Begrenzungsplatten (27) mit dem Einlegetisch (10) verbunden und dementsprechend mit diesem mitbewegbar sind.

9. Einlegemaschine nach Anspruch 8,
**dadurch gekennzeichnet, dass**
die Begrenzungsplatten (27) jeweils über Druckfedern (28) an an den beiden Längsseiten des Einlegetisches (10) über dessen Oberfläche (17) vorstehende Wangen (29) abgestützt sind.

10. Einlegemaschine nach einem der Ansprüche 7-9,
**dadurch gekennzeichnet, dass**
die Begrenzungsplatten (27) aus Gußeisen hergestellt sind.

11. Einlegemaschine nach Anspruch 9,
**dadurch gekennzeichnet, dass**
die seitlichen Wangen (29) am Einlegetisch (10), insbesondere an dessen Längsseiten angeschraubt sind (Schraubverbindung 30).

12. Einlegemaschine nach einem der Ansprüche 7-11,
**dadurch gekennzeichnet, dass**
die Begrenzungsplatten (27) in Richtung parallel zu den Seitenwänden (25) des Aufgabebehälters (10) jeweils innerhalb eines Rahmens gehalten sind, der zwei sich etwa senkrecht zur Oberfläche (17) des Einlegetisches (10) erstreckende (31, 32) sowie ein im Abstand von der Oberfläche (17) des Einlegetisches (10) sich parallel dazu erstreckendes Rahmenprofil (33) umfaßt.

13. Einlegemaschine nach Anspruch 12,
**dadurch gekennzeichnet, dass**
die Rahmenprofile (31, 32, 33) an den dem Aufgabebehälter (11) zugewandten Seiten der seitlichen Wangen (29) befestigt, insbesondere angeschraubt sind (Schraubverbindung 34).

14. Einlegemaschine nach einem der Ansprüche 7-13,
**dadurch gekennzeichnet, dass**
die elastiche Vorspannung der Begrenzungsplatten (27) einstellbar ist.
